# EUROPÄISCHE PATENTSCHRIFT

(11) **EP 1 194 309 B1**
(45) Veröffentlichungstag und Bekanntmachung des Hinweises auf die Patenterteilung: **21.09.2005**
(21) Anmeldenummer: 00936812.7
(22) Anmeldetag: 26.05.2000
(51) Int. Cl.: B60K 35/00

(54) **ANZEIGEEINRICHTUNG, INSBESONDERE FÜR EIN KRAFTFAHRZEUG**
DISPLAY DEVICE, ESPECIALLY FOR A MOTOR VEHICLE
DISPOSITIF D'AFFICHAGE, NOTAMMENT POUR AUTOMOBILE

(30) Priorität: 29.06.1999 DE 19929587
(43) Veröffentlichungstag der Anmeldung: 10.04.2002
(73) Patentinhaber: Volkswagen Aktiengesellschaft, 38436 Wolfsburg (DE)
(72) Erfinder: DIRKSEN, Susanne, D-38440 Wolfsburg (DE); HOLZ, Roland, D-38122 Braunschweig (DE); OELRICH, Christof, I-20131 Milano (IT)
(86) Internationale Anmeldenummer: PCT/EP2000/004812
(87) Internationale Veröffentlichungsnummer: WO 2001/002206

(56) Entgegenhaltungen:
- EP-A- 0 883 521
- DE-A- 4 215 630
- DE-C- 4 328 564
- US-A- 5 021 771
- US-A- 5 072 628
- US-A- 5 239 700
- US-A- 5 404 443

## Beschreibung

Die Erfindung betrifft eine Anzeigeeinrichtung, insbesondere für ein Kraftfahrzeug, umfassend eine Anzeigeeinheit, ein Steuergerät und mindestens eine Eingabeeinheit, wobei über das Steuergerät der Bildaufbau der Anzeigeeinheit steuerbar ist.

Derartige Anzeigeeinrichtungen sind beispielsweise zur Darstellung von digitalen Straßenkarten eines Navigationssystems bekannt. Die Ansteuerung der Anzeigeeinheit, die beispielsweise als LCD oder als Monitor ausgebildet ist, erfolgt dabei über das Steuergerät, das in Abhängigkeit von der aktuellen Position die Darstellung auf der Anzeigeeinheit fortlaufend verändert. Weiter verändert das Steuergerät den Bildaufbau auf der Anzeigeeinheit gegebenenfalls in Abhängigkeit von über die Eingabeeinheit eingegebene Befehle. Da insbesondere in Kraftfahrzeugen der vorhandene Bauraum begrenzt ist, sind wiederholt Anstrengungen unternommen worden, eine vorhandene Anzeigeeinrichtung mehreren Komfortsystemen zuzuordnen, so dass dann bedarfsweise die Informationen verschiedener Systeme darstellbar sind. Der Nutzer kann dann beispielsweise mittels eines Menüs ein System auswählen, dessen Informationen dann meist in Form eines weiteren Menüs dargestellt werden. Wie aus der Computertechnik bekannt, sind die angebotenen Informationen und Eingabemöglichkeiten hierarchisch in Untermenüs angeordnet. Nachteilig an den bekannten Anzeigeeinrichtungen ist, dass der Nutzer leicht den Überblick verliert, wo er sich gerade menütechnisch befindet. Ein weiterer Nachteil tritt auf, wenn der Nutzer zwischen einzelnen Darstellungen wechseln möchte, da die aus der Computertechnik bekannte Überlagerung mehrerer Menüs aufgrund der Größe der Anzeigeeinheit nur begrenzt anwendbar ist.

Aus der gattungsbildenden WO 97/31803 A ist eine Multifunktionseinnchtung für ein Kraftfahrzeug mit einer elektronischen Anzeigeeinrichtung zur Darstellung von Informationen und mindestens einem Bedienelement bekannt, wobei zumindest die Anzeigeeinrichtung im Sichtbereich des Fahrzeugführers in einem Ausstattungsteil des Kraftfahrzeuges angeordnet ist, wobei zumindest die Anzeigeeinrichtung zur Verbesserung der Ablesbarkeit in mindestens zwei Achsen schwenkbar in einem Ausschnitt des Ausstattungsteils gelagert ist. Dies hat den Vorteil, dass neben einer optimalen Ausrichtung der Anzeigeeinrichtung in Abhängigkeit des direkt einfallenden Lichtes auch gegenüber reflektierenden hellen Flecken oder Flächen im Kraftfahrzeug eine Einstellung der Anzeigeeinrichtung bezüglich einer für den Fahrzeugbenutzer angenehmen Ablese- und Blickrichtung möglich ist.

Der Erfindung liegt daher das technische Problem zugrunde, eine Anzeigeeinrichtung, insbesondere für Kraftfahrzeuge zu schaffen, mittels derer die zuvor beschriebenen Probleme überwunden werden.

Die Lösung des technischen Problems ergibt sich durch eine Anzeigeeinrichtung mit den Merkmalen des Patentanspruchs 1. Weitere vorteilhafte Ausgestaltungen der Erfindung ergeben sich aus den Unteransprüchen.

Durch eine bewegbare Anzeigeeinheit mit einer Sichtfeldbegrenzung, wobei zur Informationsdarstellung die gesamte Anzeigeeinheit nutzbar ist, kann die Anzeigeeinrichtung gleichzeitig mehreren Systemen zugeordnet werden, wobei jeweils auf der Anzeigeeinheit aktuell nur die Informationen eines Systems dargestellt werden.

Die bewegbare Anzeigeeinrichtung kann entweder unmittelbar durch eine manuelle mechanische Kraftübertragung und/oder mittelbar über die Eingabeeinheit bewegt werden. Bei der mittelbaren Bewegung werden dann die Eingabebefehle, die über Eingabeeinheit eingegeben werden, in Steuersignale für Stellglieder wie beispielsweise Schrittmotoren umgesetzt. Die Anzeigeeinheit ist dabei sphärisch ausgebildet.

In einer bevorzugten Ausführungsform ist die Anzeigeeinheit als Halbkugel- oder Kugelschale ausgebildet, wodurch eine große Anzeigefläche in einem kleinen Bauraum realisiert ist.

In einer weiteren bevorzugten Ausführungsform ist der Anzeigeeinheit für jede Bewegungsrichtung ein Anschlag zugeordnet, so dass mittels einer federnden Rücksetzeinrichtung die Anzeigeeinheit wieder in eine Grundstellung zurücksetzbar ist.

Die Eingabeeinheit ist vorzugsweise als Trackball und/oder als Joystick ausgebildet, wobei insbesondere mit einem Trackball eine Bewegungssteuerung der kugel- oder halbkugelförmigen Anzeigeeinheit sehr einfach ist. Prinzipiell kann die Eingabeeinheit auch als Druck- oder Wippschalter ausgebildet sein.

Vorzugsweise ist die Anzeigeeinheit als Touch-Screen ausgebildet, dessen berührungssensitive Felder eine Eingabeeinheit bilden, die sowohl zur Eingabe von Bewegungsbefehlen als auch zur Eingabe von Daten- und Steuerbefehlen genutzt werden können.

In einer weiteren bevorzugten Ausführungsform wird die Anzeigeeinrichtung in eine Lenkeinrichtung eines Kraftfahrzeuges integriert, so dass ein Kraftfahrzeugführer die Anzeigeeinheit in seinem unmittelbaren Gesichtsfeld hat. Entsprechend der Form der Anzeigeeinheit muss hierzu die Lenkeinrichtung zur Aufnahme der Anzeigeeinheit gegebenenfalls modifiziert werden. Hierzu ist es vorteilhaft, die Lenkeinrichtung als steer-by-wire-System auszubilden. Der Vorteil von steer-by-wire-Systemen, wie beispielsweise

Die Erfindung wird nachfolgend anhand eines bevorzugten Ausführungsbeispiels näher erläutert. Die Fig. zeigen:

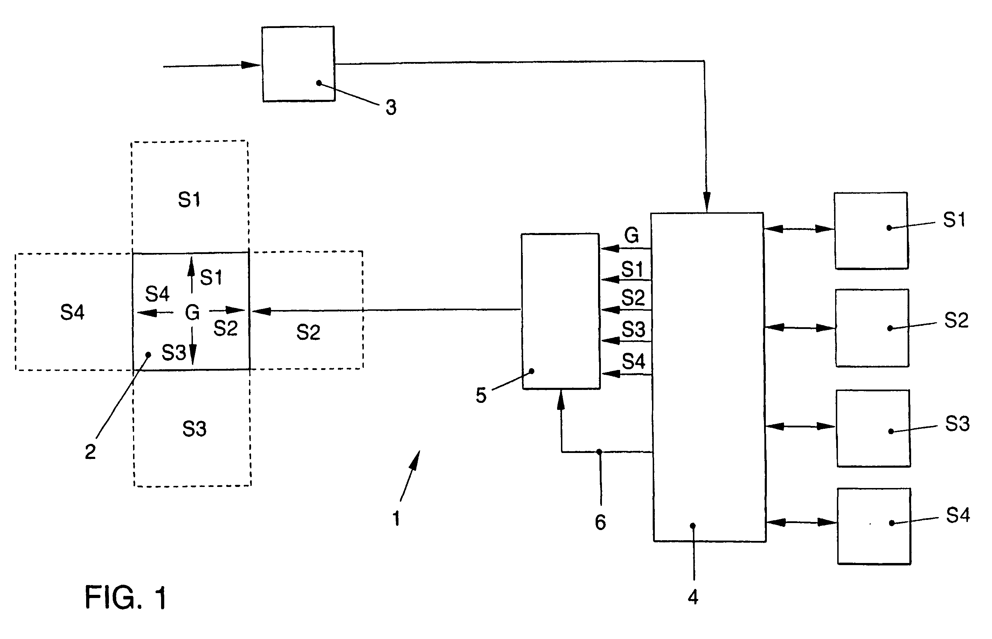

- Fig. 1: ein schematisches Blockschaltbild einer Anzeigeneinrichtung mit bewegbarem Bildaufbau in einer Grundposition, die nicht zu diese Erfindung gehört,
- Fig. 2: ein schematisches Blockschaltbild der Anzeigeneinrichtung gemäß Fig. 1 in einer zweiten Position,
- Fig. 3: eine Perspektivdarstellung einer kugelförmigen Anzeigeeinheit,
- Fig. 4: ein Sichtfeld der Anzeigeeinheit gemäß Fig. 3 in einer Grundposition,
- Fig. 5: ein Sichtfeld der Anzeigeeinheit in einer zweiten Position,
- Fig. 6: das Sichtfeld gemäß Fig. 5 nach einer Befehlseingabe und
- Fig.7: eine Perspektivdarstellung einer Lenkeinrichtung zur Aufnahme einer Anzeigeeinheit.

Die Anzeigeeinrichtung 1 umfaßt eine Anzeigeeinheit 2, eine Eingabeeinheit 3, ein Steuergerät 4, einen Multiplexer 5 und vier Komfortsysteme S1 - S4. Die Eingabeeinheit 3 ist mit dem Steuergerät 4 verbunden, das bidirektional mit den vier Komfortsystemen S1 - S4 verbunden ist. Über den Multiplexer 5 ist das Steuergerät 4 mit der Anzeigeeinheit 2 verbunden und steuert den Bildaufbau auf der Anzeigeeinheit 2, die beispielsweise als LCD-Display oder Monitor ausgebildet ist. Über die Eingabeeinheit 2 sind sowohl Bewegungsbefehle als auch Steuerbefehle für die Komfortsysteme S1 - S4 eingebbar.

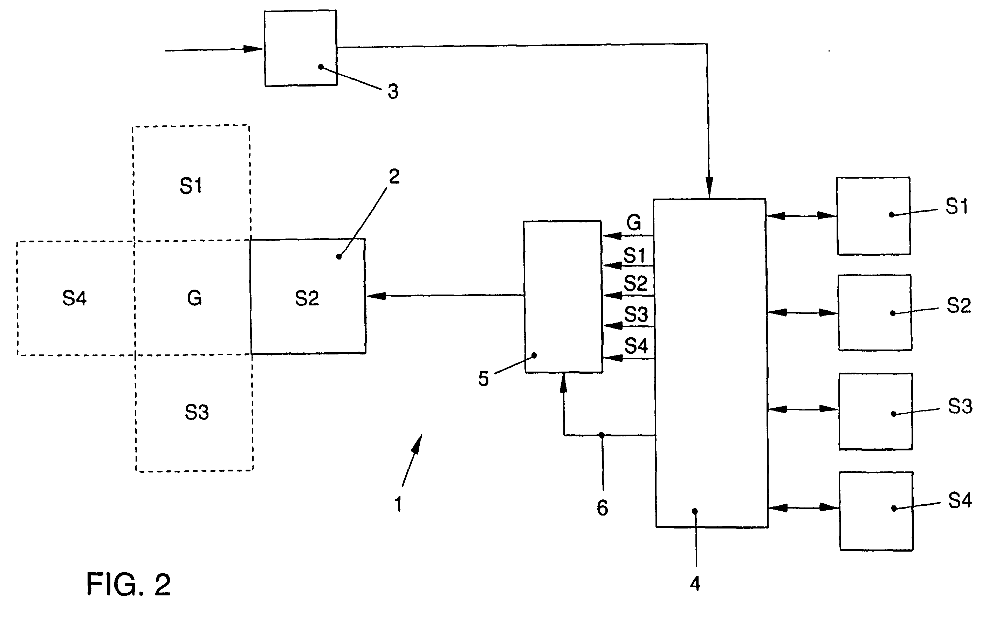

Dabei wird der Bildaufbau für alle vier Komfortsysteme S1 - S4 unabhängig voneinander berechnet und ist jeweils einzeln darstellbar. In einer Grundposition G wird der Anzeigeeinheit 2 ein entsprechender Bildaufbau durch das Steuergerät 4 über den Multiplexer 5 zugeführt. Dieser Bildaufbau stellt dar, welche Komfortsysteme S1 - S4 über die Anzeigeeinheit 2 darstellbar sind und wie diese aufrufbar sind. Dazu ist jedem Bildaufbau eines Komfortsystems S1 - S4 eine Bewegungsrichtung zugeordnet. Wird nun beispielsweise über die Eingabeeinheit 3 eine Bewegung "nach rechts" eingegeben, so wird dies durch das Steuergerät 4 erfaßt und in einen Steuerbefehl für den Multiplexer 5 umgesetzt. Dieser Steuerbefehl wird über eine Steuerleitung 6 an den Multiplexer 5 übertragen, so daß nunmehr der Bildaufbau des Komfortsystems S2 auf der Anzeigeeinheit 2 dargestellt wird, was in Fig. 2 dargestellt ist. Somit sind gedanklich die einzelnen Bildaufbaue der vier Komfortsysteme S1 - S4 um die Anzeigeeinheit 2 herum angeordnet und durch die Eingabeeinheit 3 in die Anzeigeeinheit 2 bewegbar. Bei dieser beschriebenen Ausführungsform, bleibt also die Anzeigeeinheit 2 örtlich fest, und der jeweils darzustellende Bildaufbau wird über die Eingabeeinheit 3 bewegt.

Erfindungsgemäß, bewegt sich die Anzeigeeinheit 2 selbst. Hierzu sei angenommen, daß die Anzeigeeinheit kreuzförmig ausgebildet sei, wobei dann gleichzeitig auf der Anzeigeeinheit der Bildaufbau für alle vier Komfortsystem S1 - S4 und der Grundposition dargestellt werden. In diesem Fall wird der Anzeigeeinheit 2 eine Abdeckung zugeordnet, die ein definiertes Sichtfeld der Größe eines Bildaufbaus freigibt. Da alle Bildaufbaue parallel dargestellt werden, entfällt in diesem Fall der Multiplexer 5. Dafür existiert eine Stelleinrichtung, mittels derer die Anzeigeeinheit relativ zur Abdeckung bewegbar ist, so daß der gewünschte Bildaufbau in das Sichtfeld bewegbar ist. Bei einer planaren Ausbildung der Anzeigeeinheit wird jedoch auch ein entsprechend großer Bauraum benötigt, was den Voraussetzungen in einem Kraftfahrzeug nicht entgegenkommt.

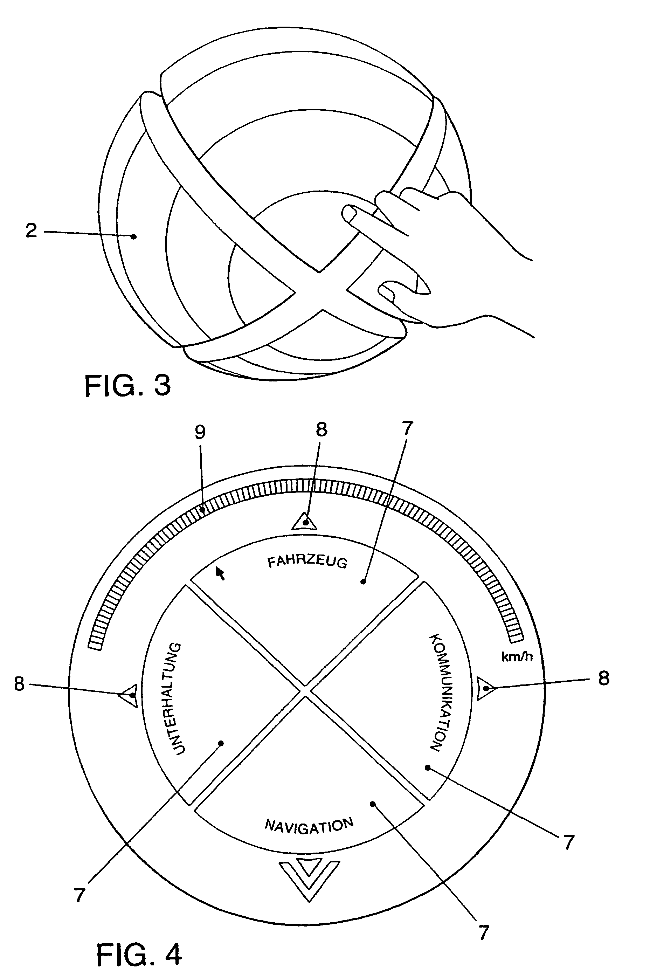

In der Fig. 3 ist eine als Kugelschale ausgebildete Anzeigeeinrichtung 2 dargestellt. Die Kugelschale ist mit einer Öffnung ausgebildet, durch die elektrische Leitungen ins Innere der Kugelschale führbar sind. Im Gegensatz zu einer planaren Anordnung läßt sich mit der Kugelschale die Fläche der Anzeigeeinheit bautechnisch kompakt realisieren. Die Kugelschale wird dann beispielsweise im Armaturenbrett angeordnet und das Bild projiziert auf die Kugelschale bewegt bzw. gedreht, wobei die Drehbarkeit auch auf bestimmte Achsen beschränkbar ist. Durch die seitliche Begrenzung im Einbauort bzw. durch eine separate Abdeckung wird das Sichtfeld auf die Kugelschale auf eine Kugelklappe begrenzt, so daß sich beispielsweise eine Darstellung gemäß Fig. 4 ergibt. Die Bewegung bzw. Drehung erfolgt beispielsweise über eine elektrische Stelleinrichtung, die ihre Steuerbefehle über eine Eingabeeinheit 3 erhält. Die Eingabeeinheit 3 wird dabei vorzugsweise an die durchzuführenden Bewegungen angepaßt. Ist die Bewegung auf zwei Achsen beschränkt, kann die Eingabeeinheit 3 als Kreuz-Tastschalter oder -Wippschalter ausgebildet sein. Bei vielachsigen Drehmöglichkeiten kommen vorzugsweise Trackballs oder joystickähnliche Bedienelemente zur Anwendung.

In der Fig. 4 ist die Anzeigeeinrichtung 2 in einer Grundposition dargestellt. Der Bildaufbau in dem Sichtfeld umfaßt vier kreissegmentförmige Anzeigefelder 7, denen jeweils ein Komfortsystem zugeordnet ist. Jedem Anzeigefeld 7 ist ein piktogrammförmiger Pfeil 8 zugeordnet, aus dem sich die Bewegungseinrichtung für den zum Komfortsystem zugehörigen Bildaufbau ergibt. Des weiteren ist oberhalb der Anzeigefelder 7 eine halbkreisförmige Skalenanzeige 9 beispielsweise für die Kraftfahrzeuggeschwindigkeit angeordnet. Möchte nun der Nutzer den Bildaufbau für die Navigation im Sichtfeld sehen, so muß die Kugelschale nach unten gedreht werden, was durch den größeren Pfeil angedeutet werden soll. Dabei kann jeder Drehrichtung ein Grenzdrehmoment zugeordnet sein, nach dessen Überwindung die Kugelschale um ein festes Bogenmaß gedreht wird, so daß der in der Drehrichtung liegende Bildaufbau vollständig im Sichtfeld dargestellt wird.

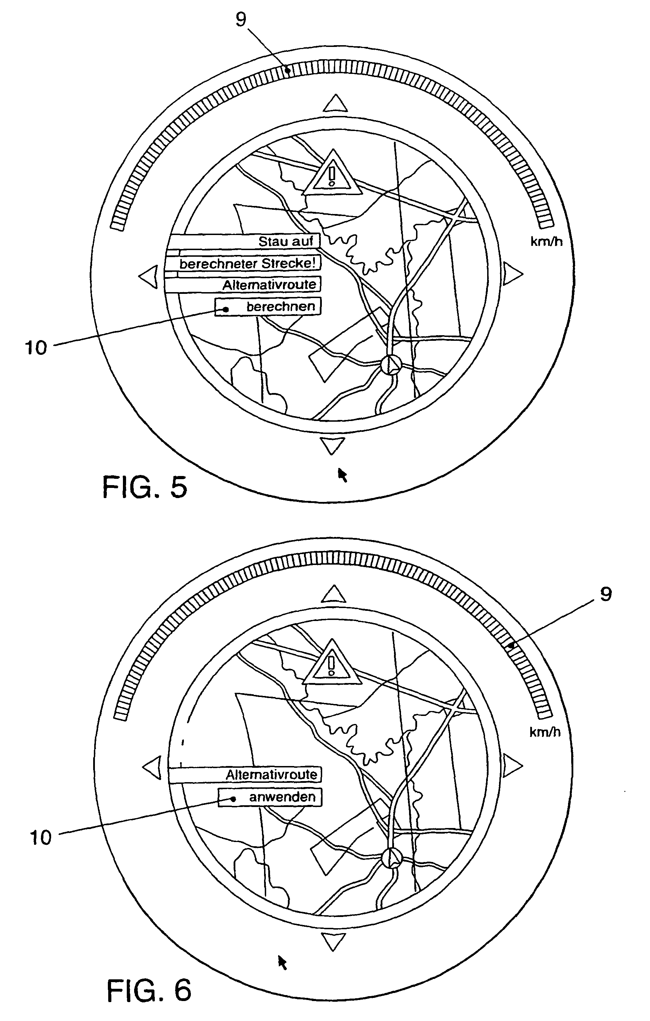

Nach der erfolgten Drehung in Pfeilrichtung erscheint ein Bildaufbau für das Navigationssystem gemäß Fig. 5. Die Skalenanzeige 9 kann dabei fest jedem Bildaufbau zugeordnet sein, so daß diese unabhängig davon, welcher Bildaufbau ausgewählt wurde, stets an der gleichen Position im Sichtfeld zu sehen ist. Bei einer Ausbildung der Anzeigeneinheit als Touch-Screen können dann Eingabepositionen über berührungssensitive Felder 10 optisch hervorgehoben dargestellt werden. Im dargestellten Beispiel wird der Nutzer gefragt, ob eine Altemativroute berechnet werden soll. Wird nun das berührungssensitive Feld 10 berührt oder der Befehl über eine andere Eingabeeinheit eingegeben, so wird die Alternativroute berechnet und gemäß Fig. 6 dargestellt. Möchte nun der Nutzer von der Navigation zur Unterhaltung wechseln, so wird die Kugelschale zunächst wieder nach oben und anschließend nach links gedreht. Des weiteren kann jeder Bewegungsrichtung ein Anschlag mit Rückstelleinrichtung zugeordnet sein. Im Beispiel gemäß Fig. 6 würde bei einer weiteren Drehung nach unten die Kugelschale in die Position gemäß Fig. 4 zurückgedreht werden.

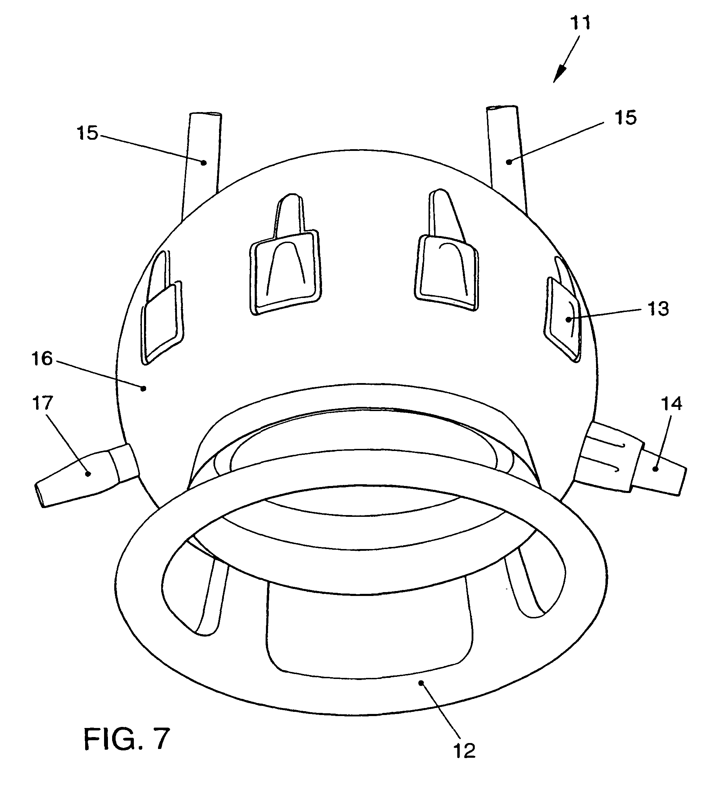

In der Fig. 7 ist perspektivisch eine Lenkeinrichtung 11 zur Aufnahme einer kugelschalenförmigen Anzeigeeinheit 2 dargestellt. Die Lenkeinrichtung 11 umfaßt ein Lenkrad 12, einen kugelschalenförmigen Basiskörper 13, Lenkeinschlagsensoren 14 und mechanische Befestigungseinrichtungen 15. Der kugelschalenförmige Basiskörper 13 weist im Bereich des Lenkrades 12 eine Öffnung auf, die von einer stegförmigen Umrandung 15 umgeben ist. In dem Basiskörper 13 wird die kugelschalenförmige Anzeigeeinheit 2 drehbar angeordnet, wobei die Öffnung mit der Umrandung 16 ein definiertes Sichtfeld bilden. Über eine Kabeldurchführung 17 werden die Versorgungs- und Steuerleitungen für die Anzeigeeinheit 2 in den Basiskörper 13 geführt.

### BEZUGSZEICHENLISTE

- (1): Anzeigeeinrichtung
- (2): Anzeigeeinheit
- (3): Eingabeeinheit
- (4): Steuergerät
- (5): Multiplexer
- (6): Steuerleitung
- (7): Anzeigefelder
- (8): Pfeil
- (9): Skalenanzeige
- (10): berührungssensitive Felder
- S1-S4: Komfortsysteme
- (11): Lenkeinrichtung
- (12): Lenkrad
- (13): Basiskörper
- (14): Radeinschlagsensoren
- (15): Befestigungseinrichtungen
- (16): Umrandung
- (17): Kabeldurchführung

## Patentansprüche

1. Anzeigeeinrichtung (1), insbesondere für ein Kraftfahrzeug, umfassend eine Anzeigeeinheit (2), ein Steuergerät (4) und mindestens eine Eingabeeinheit (3), wobei über das Steuergerät (4) der Bildaufbau der Anzeigeeinheit (2) steuerbar ist, wobei die Anzeigeeinheit (2) bewegbar und mit einer Sichtfeldbegrenzung ausgebildet ist, wobei zur Informationsdarstellung die gesamte Anzeigeeinheit (2) nutzbar ist und ein gewünschter Teil der Anzeigeeinheit (2) in die Sichtfeldbegrenzung bewegbar ist, wobei die Bewegung unmittelbar durch eine manuelle mechanische Kraftübertragung und/oder mittelbar über die Eingabeeinheit (3) durchführbar ist, **dadurch gekennzeichnet, dass** die Anzeigeeinheit (2) sphärisch ausgebildet ist.

2. Anzeigeeinrichtung nach Anspruch 1, **dadurch gekennzeichnet, dass** die Anzeigeeinheit (2) als Rotationskörper, insbesondere als Kugelschale ausgebildet ist.

3. Anzeigeeinrichtung nach einem der vorangegangenen Ansprüche, **dadurch gekennzeichnet, dass** der Anzeigeeinheit (2) für jede Bewegungsrichtung ein Druckpunkt zugeordnet ist.

4. Anzeigeeinrichtung nach einem der vorangegangenen Ansprüche, **dadurch gekennzeichnet, dass** die Eingabeeinheit (3) als Trackball und/oder als Joystick ausgebildet ist.

5. Anzeigeeinrichtung nach einem der vorangegangenen Ansprüche, **dadurch gekennzeichnet, dass** die Anzeigeeinheit (2) als Touch-Screen ausgebildet ist.

6. Anzeigeeinrichtung nach einem der vorangegangenen Ansprüche, **dadurch gekennzeichnet, dass** jeder Bewegungsrichtung ein Anschlag zugeordnet ist.

7. Anzeigeeinrichtung nach einem der vorangegangenen Ansprüche, **dadurch gekennzeichnet, dass** die Anzeigeeinheit (2) in einer Lenkeinrichtung (11) eines Kraftfahrzeuges angeordnet ist.

8. Anzeigeeinrichtung nach Anspruch 7, **dadurch gekennzeichnet, dass** die Lenkeinrichtung (11) ein Lenkrad (12) und einen im wesentlichen kugelschalenförmigen Basiskörper (13) umfasst.

9. Anzeigeeinrichtung nach Anspruch 7 oder 8, **dadurch gekennzeichnet, dass** die Lenkeinrichtung (11) als steer-by-wire-System ausgebildet.

## Claims

1. Display device (1), in particular for a motor vehicle, comprising a display unit (2), a controller (4) and at least one input unit (3), wherein image formation on the display unit (2) can be controlled by means of the controller (4), wherein the display unit (2) can be moved and is formed with a field-of-view boundary, wherein the entire display unit (2) can be used to display information and a desired part of the display unit (2) can be moved into the field-of-view boundary, wherein the movement can be performed directly by a manual mechanical transmission of force and/or indirectly by means of the input unit (3), **characterized in that** the display unit (2) is spherical.

2. Display device according to Claim 1, **characterized in that** the display unit (2) is in the form of a rotary body, in particular a spherical shell.

3. Display device according to either of the preceding claims, **characterized in that** the display unit (2) has an associated pressure point for each direction of movement.

4. Display device according to one of the preceding claims, **characterized in that** the input unit (3) is in the form of a trackball and/or a joystick.

5. Display device according to one of the preceding claims, **characterized in that** the display unit (2) is in the form of a touchscreen.

6. Display device according to one of the preceding claims, **characterized in that** each direction of movement has an associated stop.

7. Display device according to one of the preceding claims, **characterized in that** the display unit (2) is arranged in a steering device (11) of a motor vehicle.

8. Display device according to Claim 7, **characterized in that** the steering device (11) comprises a steering wheel (12) and,a base body (13) which is essentially in the form of a spherical shell.

9. Display device according to Claim 7 or 8, **characterized in that** the steering device (11) is in the form of a steer-by-wire system.

## Revendications

1. Dispositif d'affichage (1) destiné en particulier à un véhicule automobile, qui comprend une unité d'affichage (2), un appareil de commande (4) et au moine une unité d'entrée (3), la structure de l'image sur l'unité d'affichage (2) pouvant être commandée au moyen de l'appareil de commande (4), l'unité d'affichage (2) étant configurée de manière à pouvoir être déplacée et de telle sorte que le champ de vision soit limité, toute l'unité d'affichage (2) pouvant être utilisée pour représenter des informations et une partie souhaitée de l'unité d'affichage (2) pouvant être déplacée dans les limites du champ de vision, le déplacement pouvant être effectué directement au moyen d'une transmission manuelle et mécanique de force et/ou indirectement par l'intermédiaire de l'unité d'entrée (3), **caractérisé en ce que** l'unité d'affichage (2) a une configuration sphérique.

2. Dispositif d'affichage selon la revendication 1, **caractérisé en ce que** l'unité d'affichage (2) est configurée comme solide de révolution et en particulier comme surface sphérique.

3. Dispositif d'affichage selon l'une des revendications précédentes, **caractérisé en ce qu'**un point de poussée est associé à chaque sens de déplacement de l'unité d'affichage (2).

4. Dispositif d'affichage selon l'une des revendications précédentes, **caractérisé en ce que** l'unité d'entrée (3) est configurée comme souris inversée et/ou comme manette de jeu.

5. Dispositif d'affichage selon l'une des revendications précédentes, **caractérisé en ce que** l'unité d'affichage (2) est configurée comme écran tactile.

6. Dispositif d'affichage selon l'une des revendications précédentes, **caractérisé en ce qu'**une butée est associée à chaque sens de déplacement.

7. Dispositif d'affichage selon l'une des revendications précédentes, **caractérisé en ce que** l'unité d'affichage (2) est agencée dans le mécanisme de direction (11) d'un véhicule automobile.

8. Dispositif d'affichage selon la revendication 7, **caractérisé en ce que** le mécanisme de direction (11) comprend un volant (12) et un corps de base (13) essentiellement en forme de surface sphérique.

9. Dispositif d'affichage selon les revendications 7 ou 8, **caractérisé en ce que** le mécanisme de direction (11) est configuré comme système de commande électronique ("steer-by-wire-system").
